# EUROPÄISCHE PATENTSCHRIFT

(11) **EP 0 514 930 B1**
(45) Veröffentlichungstag und Bekanntmachung des Hinweises auf die Patenterteilung: **07.12.1994**
(21) Anmeldenummer: 92108692.2
(22) Anmeldetag: 22.05.1992
(51) Int. Cl.: F23D 14/12, F23D 14/64, F23D 14/66, F24C 3/04

(54) **Strahlungsbrenner für gasförmigen Brennstoff**
Radiant burner for gaseous fuel
Brûleur radiant pour combustible gazeux

(30) Priorität: 23.05.1991 DE 4116898
(43) Veröffentlichungstag der Anmeldung: 25.11.1992
(73) Patentinhaber: Schwank GmbH, D-50735 Köln (DE)
(72) Erfinder: Schwank, Bernd, D-50735 Köln (DE)
(74) Vertreter: Köhne, Friedrich, Dipl.-Ing.

(56) Entgegenhaltungen:
- FR-A- 2 380 495
- US-A- 3 225 815
- US-A- 3 434 466

## Beschreibung

Die Erfindung bezieht sich auf einen Strahlungsbrenner für gasförmigen Brennstoff.

Es wird ausgegangen von einem Stand der Technik, der aus der EP-A-0 457 954 (Stand der Technik nach Artikel 54(3) EPÜ) bekannt ist. Die hierin offenbarten verschiedenen Konstruktionen von Strahlungsbrennern haben sich in der Praxis vor allem in kleineren Baueinheiten sehr gut bewährt.

Die Tendenz geht nun dahin, größere vor allem längere Strahlungsbrenner mit Längen von 1 bis 2 m und darüber zu bauen. Bei derartigen Strahlungsbrennern, die in großen Stückzahlen hergestellt werden müssen, kommt es sehr auf den Bauaufwand an. Es ergeben sich dabei erhebliche Probleme in Bezug auf die Herstellung und Formgebung und das Zusammensetzen der einzelnen Blechteile. Ein weiteres Problem ist die Verwindungssteifigkeit des Gehäuses, vor allem wirkt sich bei großflächigen Blechteilen die unterschiedliche Wärmeausdehnung aus, die nicht nur zu Spannungen, sondern auch zu Verwerfungen und zu Undichtigkeiten, insbesondere auch im Bereich der Brenner-Keramik-Platten führt. Ein Unterteilen der längsverlaufenden Gehäusewände etwa in mittlerer Höhe führt nicht zu einem befriedigenden Ergebnis, zumal dadurch die Herstellungskosten wesentlich vergrößert werden, besonders dann, wenn die Blechteile auch noch im Querschnitt gesehen unterschiedlich gebogen gestaltet sind. Besonders bei langen Strahlungsbrennern steht das weitere Problem im Vordergrund, daß nicht nur das Brennstoff-Luft-Gemisch in der Gemischkammer und insbesondere auf der Einströmseite der Brenner-Keramik-Platten gleichmäßig verteilt sein muß, sondern daß hier auch überall ein gleichmäßiger Überdruck vorherrschen muß, um die Funktionsfähigkeit des Strahlungsbrenners nicht zu gefährden. Das Problem liegt vor allem darin, daß der Gasdruck z. B. in den städtischen Gas-Versorgungsleitungen vielerorts, vor allem im Ausland recht niedrig ist, nicht zuletzt auch aus Sicherheitsgründen. Es ist zwar bekannt, an eine Gas-Versorgungsleitung ein regelbares Gebläse anzuschließen, um den erforderlichen Gasdruck zu erzeugen. Dadurch ergibt sich aber ein solch hoher Kostenaufwand, daß derartige Strahlungsbrenner auf dem Markt nicht akzeptiert werden, zumal für den Betrieb des Gebläses eine separate elektrische Versorung erforderlich ist.

Der Erfindung liegt demgemäß die Aufgabe zu Grunde, den oben genannten Strahlungsbrenner in der Gesamtkonstruktion so zu verbessern, daß die Herstellungskosten erheblich vermindert werden, daß ferner eine große Stabilität erreicht wird, daß außerdem ein erhöhter wirksamer Gasdruck eingangsseitig der Brenner-Keramik-Platten erzielt und die Infrarotstrahlung intensiviert wird.

Die gestellte Aufgabe wird erfindungsgemäß durch die Kombination folgender Merkmale gelöst:
a) ein im Querschnitt etwa trapezförmiges, an der Unterseite offenes doppelwandiges Gehäuse mit Reflektorinnenwänden,
b) eine im Oberteil des Gehäuses angeordnete Gemischkammer zur Aufbereitung des gasförmigen Brennstoff-Luft-Gemisches,
c) mindestens eine an der offenen Unterseite der Gemischkammer angeschlossene, zahlreiche Verbrennungskanäle aufweisende Brenner-Keramik-Platte mit Hauptstrahlungsrichtung nach unten,
d) mindestens eine ungelochte Glaskeramikplatte, die mit möglichst geringem Abstand von der Abstrahlungsseite der Brenner-Keramik-Platte derart vorgesetzt ist, daß die Verbrennungsabgase mindestens in einem Randbereich abströmen können,
e) eine Vorrichtung zum Zuführen von Brennstoff und Luft bestehend aus einer aus einer Brennstoffleitung angeschlossenen Injektordüse und einem Mischrohr, welches an dem einen Stirnende nach der Injektordüse zu offen und anschließend als Venturirohr ausgebildet ist, sich mindestens über einen Teil der Länge innerhalb einer schräg verlaufenden Doppelwand des Gehäuses möglichst nahe an dem Gehäuseunterrand, jedoch unter einem spitzen Winkel ansteigend erstreckt und eine öffnung zum freien Durchtritt des Brennstoff-Luft-Gemisches aufweist,
f) eine Zwischenkammer zwischen dem Mischrohr und der Gemischkammer ist in dem doppelwandigen Gehäuse derart gebildet, daß mindestens die Reflektorinnenwand von heißen Verbrennungsabgasen bestrichen und das in der Zwischenkammer aufwärts strömende Brennstoff-Luft-Gemisch vorgewärmt wird, so daß dieses auf der gesamten Gehäuseaußenlänge einem Auftrieb unterworfen ist.

Vorteilhafte Ausgestaltungen des erfindungsgemäßen Strahlungsbrenners ergeben sich aus den Unteransprüchen.

In der Zeichnung sind Ausführungsbeispiele der Erfindung im Schema dargestellt, und zwar zeigen
Figur 1 einen Vertikalschnitt durch einen Strahlungsbrenner in vereinfachter Darstellung,
Figur 2 einen Vertikalschnitt entsprechend Figur 1 mit Konstruktionsänderungen,
Figur 3 einen Längsschnitt zu Figur 2 gemäß Schnittlinie III-III in vereinfachter Darstellung,
Figur 4 einen Vertikalschnitt entsprechend Figur 1 mit Detailänderungen,
Figur 5 einen Teilvertikalschnitt mit Darstellung von konstruktiven Ergänzungen, die auf die Figuren 1, 2 und 4 übertragbar sind,
Figur 6 eine Stirnansicht auf eine Reflektorinnenwand mit oberem Falzanschluß,
Figur 7 eine Seitenansicht zu Figur 6 in Richtung des Pfeiles VII,
Figur 8 einen Teillängsschnitt entsprechend Figur 3 in stark verkürzter Darstellung,
Figur 9 eine Aufhängevorrichtung in vergrößertem Maßstab,
Figur 10 eine Teilseitenansicht auf eine Injektordüse mit anschließendem Venturirohr,
Figur 11 eine Stirnansicht zu Figur 10 und
Figur 12 einen Teillängsschnitt durch eine andere konstruktive Ausführung einer Injektordüse mit Venturirohr und Haltekonstruktion mit Veranschaulichung der Anordnung unter einem spitzen Winkel.

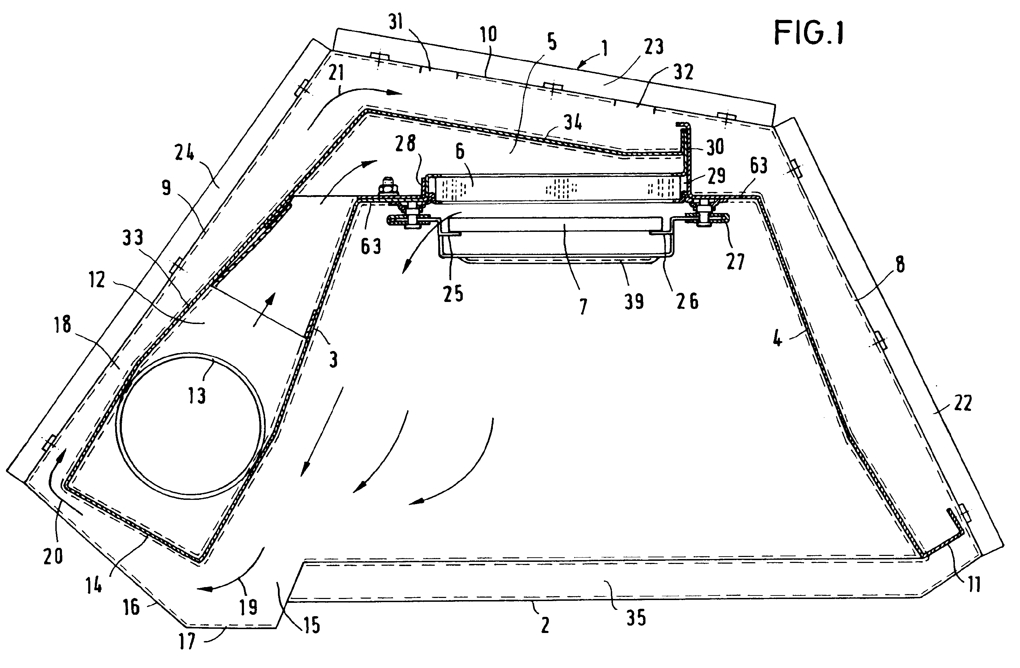

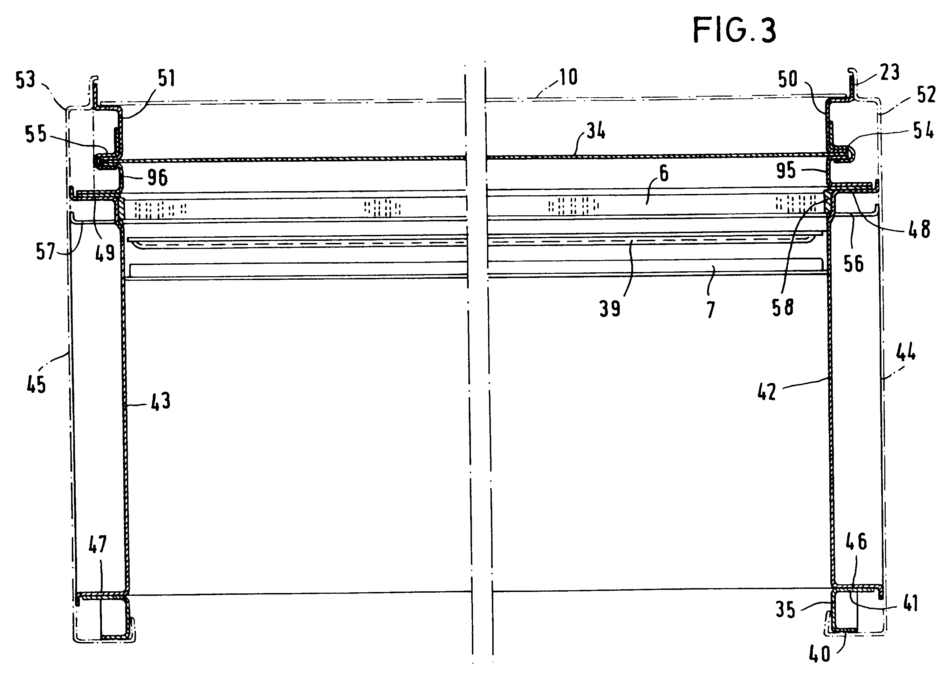

Figur 1 veranschaulicht die grundsätzliche Konstruktion eines erfindungsgemäßen Strahlungsbrenners im Vertikalschnitt. Der besseren Deutlichkeit halber ist die Darstellung vereinfacht, d. h. die in den nachfolgenden Figuren dargestellten Konstruktionseinzelheiten können entsprechend auf die Figur 1 übertragen werden. Der Strahlungsbrenner besitzt ein im Querschnitt etwa trapezförmiges Gehäuse 1, welches an der Unterseite 2 vollständig offen ist. Das Gehäuse ist an der Oberseite und an allen vier Seiten doppelwandig ausgeführt, wobei die beiden schräg und längsverlaufenden Wände als Reflektorinnenwände 3 und 4 wirken. Mit Abstand von den Reflektorinnenwänden 3, 4 sind Außenwände 8 und 9 angeordnet, an deren oberen Kanten eine obere Außenwand 10 befestigt ist. Im Oberteil des Gehäuses 1 ist eine Gemischkammer 5 zur endgültigen Aufbereitung des gasförmigen Brennstoff-Luft-Gemisches angeordnet, die, wie dargestellt, leicht trapezförmig gestaltet ist und von einer oberen Begrenzungswand 34, an dem in Figur 1 rechten Ende von einem umgekanteten Abschlußblech 30, an der Unterseite von Begrenzungswandteilen 63 und gemäß Figur 3 stirnseitig von Wandteilen 95 und 96 gebildet ist. Die Gemischkammer 5 hat an der Unterseite zwischen den Begrenzungswandteilen 63 eine große rechteckige Öffnung, die sich über die gesamte Länge des Gehäuses, also senkrecht zur Bildebene der Figur 1 erstreckt. In dieser Öffnung ist mindestens eine zahlreiche Verbrennungskanäle aufweisende Brenner-Keramik-Platte 6 eingesetzt. Diese Platte ist im allgemeinen aus Reihen einzelner Plattenteile zusammengesetzt, die an den Längsrändern von Einfassungen 28 unter Zwischenschaltung von Dichtungen 29 umgeben sind. Entsprechende Einfassungen durch abgekantete Blechteile 48 und 49 und entsprechende Dichtungen 58 sind gemäß Figur 3 auch an den Stirnseiten vorhanden. Im Betrieb erzeugt die Brenner-Keramik-Platte 6 im wesentlichen eine Infrarotstrahlung mit Hauptstrahlungsrichtung nach unten. Ein Teil der Strahlung trifft aber auch auf die Reflektorinnenwände 3 und 4 und wird von diesen reflektiert.

Mit möglichst geringem Abstand von der Abstrahlungsseite der Brenner-Keramik-Platte 6 ist mindestens eine hitzebeständige ungelochte Glaskeramikplatte 7 derart vorgesetzt, daß die Verbrennungsabgase mindestens in einem Randbereich etwa in Richtung der eingezeichneten Pfeile abströmen können. Die Glaskeramikplatte 7 kann vorteilhaft ebenfalls aus Reihen von Plattenteilen zusammengesetzt sein. Die Glaskeramikplatte 7 bringt den wesentlichen Vorteil mit sich, daß sie einerseits die Infrarotstrahlung nahezu ungehindert durchläßt, daß sie aber andererseits hauptsächlich durch Konvektion mit den heißen Verbrennungsabgasen aufgeheizt wird und ihrerseits einen zusätzlichen erheblichen Anteil an Wärmestrahlung, hauptsächlich auch Infrarotstrahlung abgibt. Dadurch wird ein Teil der in den Verbrennungsabgasen enthaltenden Wärmeenergie in erwünschte Wärmestrahlung umgesetzt. Es müssen nicht alle Randbereiche der Glaskeramikplatte 7 zum Abströmen der Verbrennungsabgase offen sein, sondern es können auch der in Figur 1 rechte Rand und / oder die beiden Stirnenden durch Bleche zwischen diesen Randbereichen der Glaskeramikplatte 7 und den entsprechenden Rändern der Brenner-Keramik-Platte 6 geschlossen werden. Dies ist besonders dann von Vorteil, wenn man gezielt den Strom der Verbrennungsabgase in Richtung der Reflektorinnenwand 3 und damit in Richtung der nachfolgend erläuterten Zwischenkammer 12 leiten will.

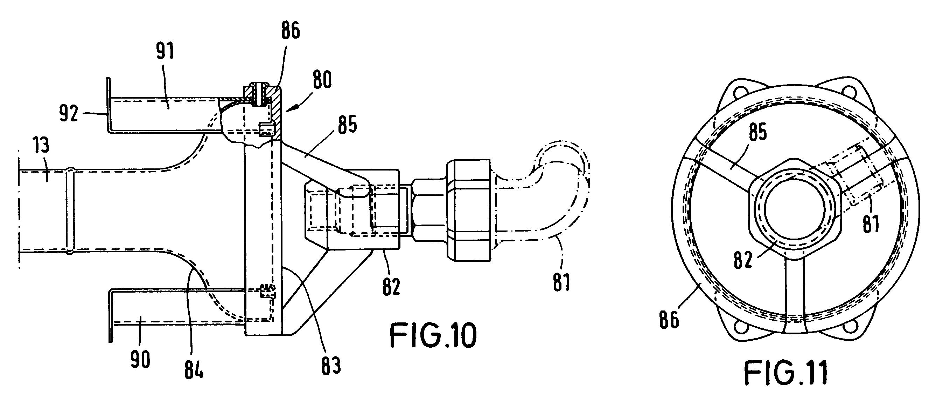

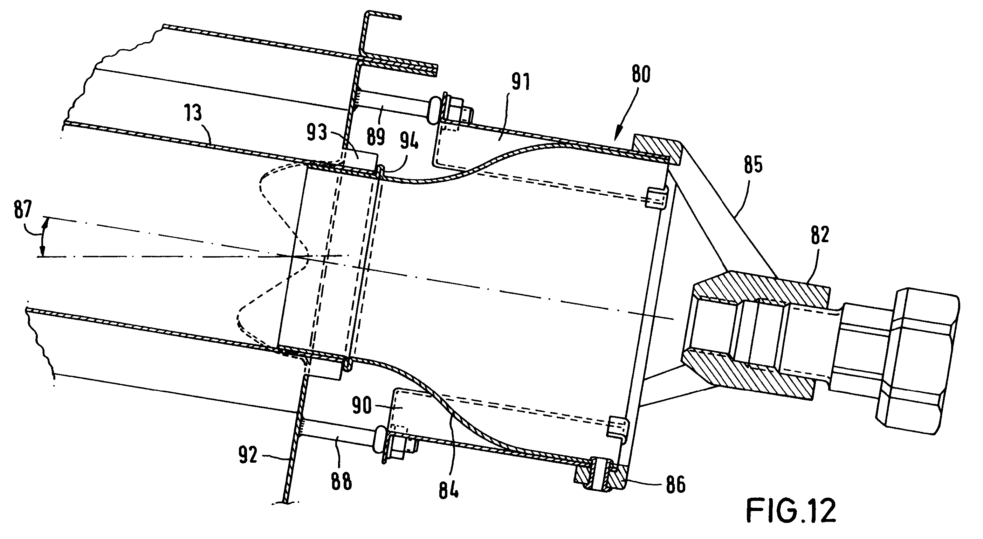

Der Strahlungsbrenner besitzt ferner eine Vorrichtung 80 zum Zuführen von Brennstoff und Luft, die in den Figuren 10 und 11 bzw. 12 in etwas unterschiedlichen Konstruktionen veranschaulicht ist. Die Vorrichtung weist eine Injektordüse 82 auf, die an eine Brennstoffleitung 81 angeschlossen ist. Die Injektordüse 82 ist mit der Düsenöffnung nach einem Mischrohr 13 zu gerichtet. Das Mischrohr 13 ist an dem einen Stirnende 83 nach der Injektordüse 82 zu offen und in diesem Anfangsteil, wie dargestellt, nach Art eines Venturirohres 84 ausgebildet. Durch Wirkung des aus der Injektordüse 82 austretenden Strahles des gasförmigen Brennstoffes wird durch die stirnseitige Öffnung des Venturirohres Umgebungsluft mitgerissen, die in dem Mischrohr eine erste Vermischung mit dem Brennstoff erfährt. Die Injektordüse 82 ist über Abstandshalter 85 mit einem Flansch 86 verbunden, der am Stirnende des Venturirohres 84 befestigt ist. Das Venturirohr 84 und damit das gesamte Mischrohr 13 ist demontierbar mittels Trägern, beispielsweise Winkelblechen 90 und 91 an einem Wandblech 92 angebracht, und zwar an der Stirnwand des Gehäuses 1. Bei dem Ausführungsbeispiel nach Figur 12 sind auf dem Umfang zwischen den Trägern 90, 91 und dem Wandblech 92 Justierschrauben 88 und 89 vorgesehen, die zum einen ein genaues Einstellen der gesamten Vorrichtung 80 und zum anderen eine einfache Montage und Demontage erlauben. Zum besseren Justieren und zur Vereinfachung der Montage ist noch ein Kragen 93 und ein an diesem anliegender Falz 94 vorgesehen.

Wie aus den Figuren 1, 2 und 4 ersichtlich ist, ist das Mischrohr 13 innerhalb einer schräg verlaufenden Doppelwand des Gehäuses, nämlich zwischen der Reflektorinnenwand 3 und der Außenwand 9, die auf Grund der Trapezform des Gehäuses schräg verlaufen, angeordnet, und zwar möglichst nahe an dem Gehäuseunterrand 16. Bei den dargestellten Ausführungsbeispielen befindet sich das Mischrohr 13 innerhalb einer Zwischenkammer 12. Das Mischrohr erstreckt sich mindestens über einen Teil der Länge der Zwischenkammer. In Figur 12 ist dargestellt, daß das Mischrohr 13 unter einem spitzen Winkel 87 vom Venturirohr 84 ausgehend ansteigt. Das innere Stirnende des Mischrohres hat eine öffnung zum freien Durchtritt des Brennstoff-Luft-Gemisches. Zusätzlich kann noch auf der Oberseite des Mischrohres nach dessen innerem Ende zu eine mehr oder weniger lange schlitzartige Öffnung vorgesehen sein. Das Mischrohr ist im übrigen so gestaltet, daß die Strömung möglichst laminar ist und daß gleichzeitig eine gleichmäßige Verteilung des Brennstoff-Luft-Gemisches in der anschließenden Zwischenkammer 12 erfolgt.

Die Zwischenkammer 12 befindet sich zwischen dem Mischrohr 13 und der Gemischkammer 5 und ist in dem doppelwandigen Gehäuse zwischen den Gehäusewänden 3 und 9 derart ausgebildet, daß mindestens die Reflektorinnenwand 3 von heißen Verbrennungsabgasen bestrichen und das in der Zwischenkammer aufwärts strömende Brennstoff-Luft-Gemisch vorgewärmt wird. Auf Grund der Höhe der Gemischkammer und der Vorwärmung ergibt sich über die gesamte Länge des Gehäuses eine Kaminwirkung, d. h. das Brennstoff-Luft-Gemisch wird einem Auftrieb unterworfen, der sich in einem zusätzlichen Druck auf der Eintrittsseite in die Brenner-Keramik-Platte 6 auswirkt. Um den Auftrieb und damit den zusätzlichen Druck weiter zu erhöhen, kann der doppelwandige Trapezschenkel des Gehäuses, der die Zwischenkammer enthält, nach unten weiter verlängert und damit auch das Mischrohr weiter nach unten verlagert werden.

Um den Fertigungsaufwand bedeutend zu verringern, sind im wesentlichen alle Blechteile des Gehäuses 1 aus ebenflächigen Blechen durch Umkantungen oder Falzen gebildet und miteinander verbunden. Dies gilt sowohl für die Außenwände 8, 9 und 10 als auch für die Reflektorinnenwände 3, 4 und die weiteren Begrenzungswände 14 und 33 der Zwischenkammer 12 und für die Begrenzungswände 34 und 63 der Gemischkammer 5. Desweiteren bestehen auch die in Figur 3 ersichtlichen Stirnwände des Gehäuses, und zwar die Innenwände 42 und 43 und die Außenwände 44 und 45 im wesentlichen aus ebenflächigen Blechteilen, die an den oberen Enden 48 und den unteren Enden 46, 47 umgekantet und jeweils mit der benachbarten Wand verbunden sind. Entsprechende Umkantungen haben auch die äußeren Stirnwandteile 52 und 53 sowie die oberen Innenwandteile 50, 51 sowie 95 und 96. Die Randeinfassungen 54 und 55 bestehen aus gekanteten Blechstreifen, ebenso die Abstandshalter 56 und 57. Zur weiteren Verstärkung des Gehäuses und Erzielung einer besseren Verwindungssteifigkeit weisen die Blechteile der Gehäuseaußenwände 8, 9 und 10 an ihren Rändern um 90° nach außen umgekantete Rippen 22, 23 und 24 auf.

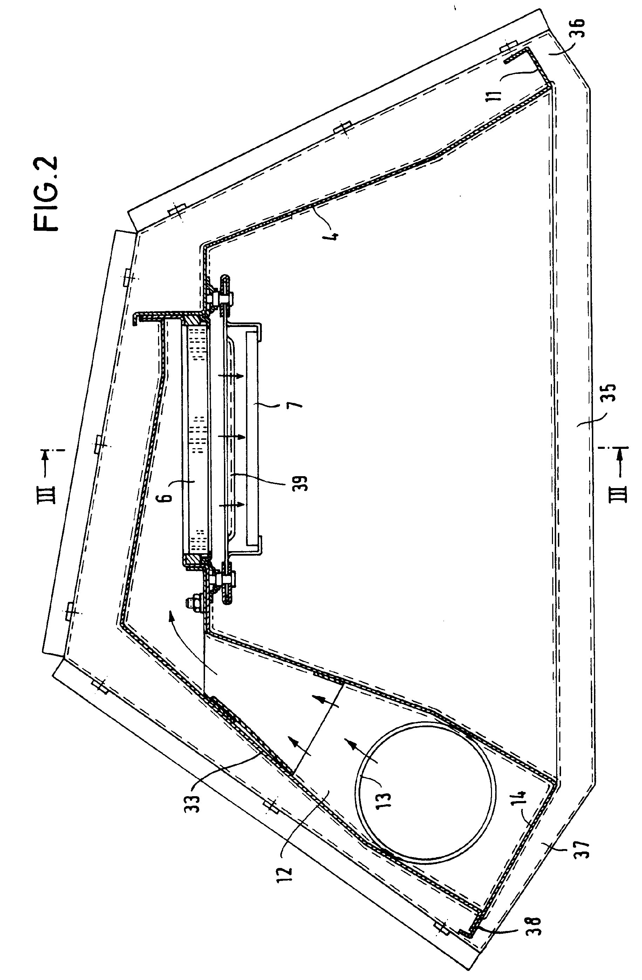

Figur 2 zeigt, daß das untere Ende der Reflektorinnenwand 4 mit einem U-förmigen Teil 11 nach außen umgekantet ist und daß die untere Abschlußwand 14 der Zwischenkammer 12 nach außen verlängert und der Wand dieses Blechteiles 38 nach oben umgekantet ist. Zur weiteren Stabilisierung des Gehäuses ist der untere Gehäuserand mit den beiden stirnseitigen mittleren Teilen 35 und den beiden seitlichen abgewinkelten Teilen 36 und 37 kastenförmig aus umgekanteten Blechteilen mit waagerechten Schenkeln 40 und 41 ausgebildet, wie insbesondere aus Figur 3 zu ersehen ist.

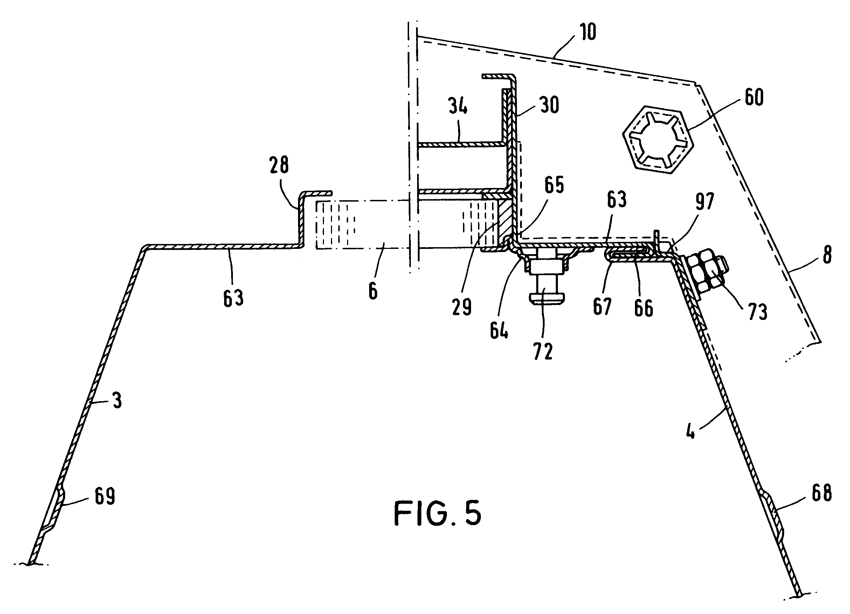

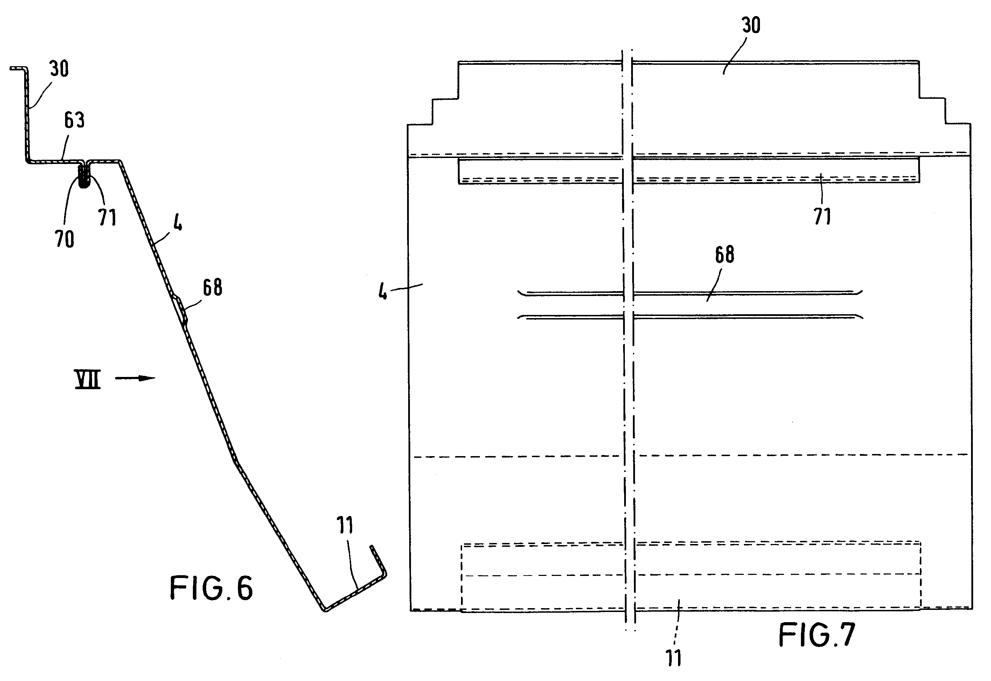

Die Figuren 5 bis 7 veranschaulichen wichtige Konstuktionsdetails, die zwar in den Figuren 1 und 2 der Einfachheit halber nicht dargestellt sind, jedoch auch hier anzuwenden sind. Ein Konstruktionsdetail besteht darin, daß zwischen den Reflektorinnenwänden 3 und 4 einerseits und den Trägern bzw. den Begrenzungswänden 63 für die Brenner-Keramik-Platte 6 sowie für die Glaskeramikplatte 7 andererseits Wärmeausdehnungsfalze vorgesehen sind. Bei der Ausführung nach Figur 5 bestehen die Wärmeausdehnungsfalze 66 und 67 aus je zwei umgebogenen ineinander greifenden Blechrändern, die U-förmig gestaltet sind. Die Figuren 6 und 7 zeigen den oberen Anschluß der Reflektorinnenwand 4. Die dargestellten Konstruktionsdetails gelten aber sinngemäß auch für die Reflektorinnenwand 3. Wie zu ersehen ist, ist der obre Rand der Reflektorinnenwand 4 waagerecht nach innen umgekantet. Hieran schließt sich ein U-förmiger nach oben öffnender Falz 71 an, zwischen dessen beide vertikale Schenkel ein Steg 70 eingreift, welcher am Rand des Trägerbleches 63 umgekantet ist. Die unterschiedlich wärmebeaufschlagten Reflektorinnenwände 3, 4 können sich auf diese Weise ausdehnen und wieder zusammenziehen. Die Figuren 5 bis 7 zeigen ein weiteres Konstruktionsdetail, nämlich daß im mittleren Bereich der Reflektorinnenwände 3, 4 längsverlaufende Sicken 68 und 69 eingepreßt sind.

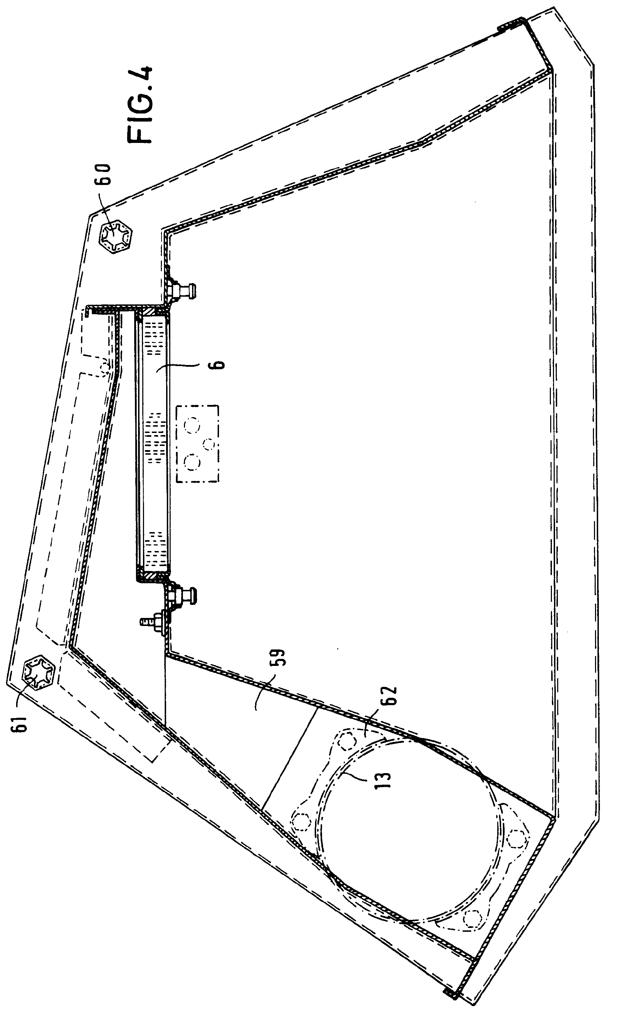

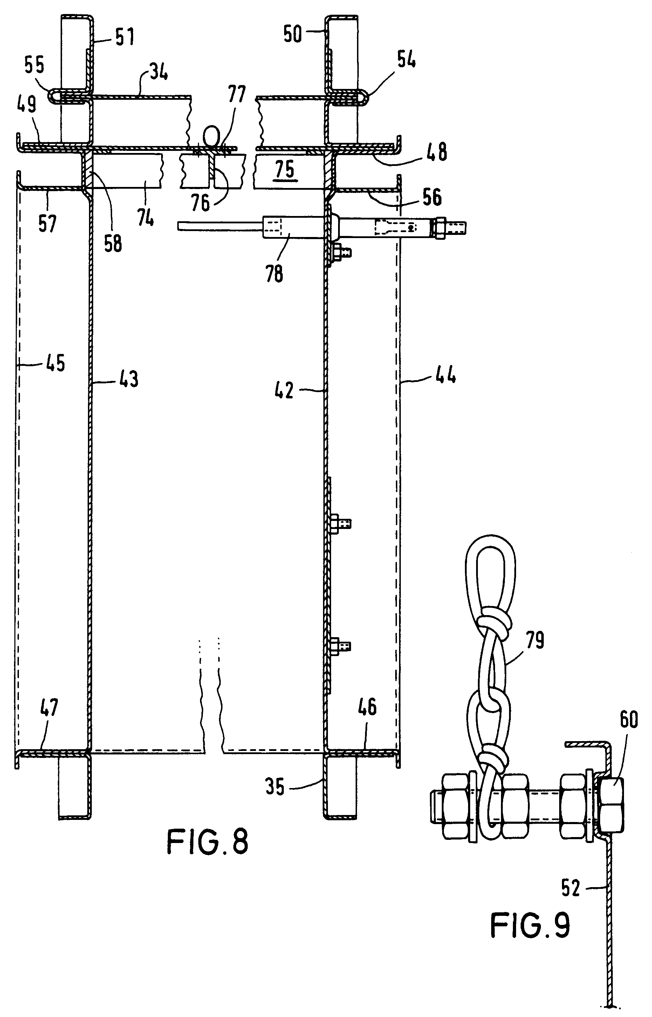

Figur 4 zeigt weiter Konstruktionsdetails, insbesondere eines von mehreren über die Länge der Zwischenkammer verteilten Leitbleche 59, ferner zwei Aufhängeschrauben 60 und 61, an welchen Ketten 79 einer Aufhängevorrichtung befestigt werden können, wie Figur 9 zeigt. Ferner ist die Befestigungsvorrichtung 62 für das Mischrohr 13 dargestellt.

Figur 5 zeigt weitere Konstruktionseinzelheiten, wie zum Beispiel ein Halteblech 64 mit einem Rippenvorsprung 65. Hierdurch wird die Brenner-Keramik-Platte 6 am unteren Rand gehalten und die Dichtung 29 durch Eindringen des Rippenvorsprunges 65 zusammengepreßt. Das Halteblech 64 ist durch eine Schraubverbindung 72 befestigt. Ferner wird durch eine Schraube 73 ein Sicherungsblech 97 gegen den Wärmeausdehnungsfalz 66, 67 gedrückt.

Wenn es darauf ankommt, in der Zwischenkammer 12 einen größeren Auftrieb des Brennstoff-Luft-Gemisches vom Mischrohr 13 bis hin zur Gemischkammer 5 zu erzeugen, kann ein Teil der Verbrennungsabgase auch so geleitet werden, daß nicht nur die Reflektorinnenwand 3 sondern auch die untere Abschlußwand 14 und die Außenwand 33 der Zwischenkammer 12 von den Verbrennungsabgasen bestrichen werden. Wie aus Figur 2 ersichtlich ist, ist dazu die Gehäuseaußenwand 9 mit Abstand von dem unteren Ende 14 und der Außenwand 33 der Zwischenkammer 12 sowie der oberen Begrenzungswand 34 der Gemischkammer 5 derart gestaltet, daß ein Außenkanal 18 zum Aufwärtsströmen der heißen Verbrennungsabgase gebildet ist. Die Strömungsrichtung ist durch die Pfeile 19, 20 und 21 angegeben. In dem Teil der ebenflächigen Gehäuseaußenwand 10, der sich oberhalb der Gemischkammer 5 befindet, sind über die Länge und Breite dieser Gehäusewand 10 zahlreiche Ausströmöffnungen 31 und 32 vorgesehen. Eine konstruktive Verbesserung ergibt sich dadurch, daß an das Blechteil 16 ein abgekantetes Blech 17 angeschlossen ist, so daß sich eine Art Fangtasche 15 ergibt.

Die oben beschriebene Glaskeramikplatte 7 wird vorteilhafterweise von einem Rahmen 27 über Abstandshalter 25 und 26 getragen. Ebenso wie die Brenner-Keramik-Platte 6 kann auch die Glaskeramikplatte 7 aus zwei oder mehreren Plattenteilen zusammengesetzt sein. In diesem Falle ist der Rahmen 27 als Gitterrahmen ausgebildet. Eine Aufteilung der Brenner-Keramik-Platte in Plattenteile 74 und 75 ist aus Figur 8 zu ersehen. An der mit einer Dichtung versehenen Trennfuge 76 greift eine Halterung 71 für die Platteninnenränder an. Mit dem Bezugszeichen 78 ist ein üblicher Zünder bezeichnet.

Um eine weitere Energieausnutzung zu erreichen, ist der Glaskeramikplatte 7 ein Strahlungsgitter 39 vorgeschaltet. Wenn es auf Grund der Größe der Brenner-Keramik-Platte 6 und wegen der Menge der ausströmenden Verbrennungsabgase erforderlich ist, die Glaskeramikplatte 7 mit einem etwas größeren Abstand von der Brenner-Keramik-Platte 6 anzuordnen, kann das Strahlungsgitter 39 gemäß Figur 2 zwischen der Brenner-Keramik-Platte 6 und der Glaskeramikplatte 7 befestigt werden. Normalerweise ist das Strahlungsgitter aber gemäß Figur 7 mit Abstand unterhalb der Glaskeramikplatte 7 befestigt. In jedem Fall wird das Strahlungsgitter so stark erhitzt, daß es seinerseits zusätzliche Wärmestrahlung aussendet.

## Patentansprüche

1. Strahlungsbrenner für gasförmigen Brennstoff, mit folgenden Merkmalen:
a) ein im Querschnitt etwa trapezförmiges, an der Unterseite (2) offenes doppelwandiges Gehäuse (1) mit Reflektorinnenwänden (3, 4),
b) eine im Oberteil des Gehäuses (1) angeordnete Gemischkammer (5) zur Aufbereitung des gasförmigen Brennstoff-Luft-Gemisches,
c) mindestens eine an der offenen Unterseite der Gemischkammer (5) angeschlossene, zahlreiche Verbrennungskanäle aufweisende Brenner-Keramik-Platte (6) mit Hauptstrahlungsrichtung nach unten,
d) mindestens eine ungelochte Glaskeramikplatte (7), die mit möglichst geringem Abstand von der Abstrahlungsseite der Brenner-Keramik-Platte (6) derart vorgesetzt ist, daß die Verbrennungsabgase mindestens in einem Randbereich abströmen können,
e) eine Vorrichtung (80) zum Zuführen von Brennstoff und Luft bestehend aus einer an eine Brennstoffleitung (81) angeschlossenen Injektordüse (82) und einem Mischrohr (13), welches an dem einen Stirnende (83) nach der Injektordüse (82) zu offen und anschließend als Venturirohr (84) ausgebildet ist, sich mindestens über einen Teil der Länge innerhalb einer schräg verlaufenden Doppelwand (3, 9) des Gehäuses (1) möglichst nahe an dem Gehäuseunterrand (14, 16), jedoch unter einem spitzen Winkel (87) ansteigend erstreckt und eine öffnung zum freien Durchtritt des Brennstoff-Luft-Gemisches aufweist,
f) eine Zwischenkammer (12) zwischen dem Mischrohr (13) und der Gemischkammer (5) ist in dem doppelwandigen Gehäuse (3, 9) derart gebildet, daß mindestens die Reflektorinnenwand (3) von heißen Verbrennungsabgasen bestrichen und das in der Zwischenkammer (12) aufwärts strömende Brennstoff-Luft-Gemisch vorgewärmt wird, so daß dieses auf der gesamten Gehäuseaußenlänge einem Auftrieb unterworfen ist.

2. Strahlungsbrenner nach Anspruch 1, dadurch gekennzeichnet, daß im wesentlichen alle Blechteile des Gehäuses aus ebenflächigen Blechen durch Umkantungen oder Falzen gebildet und miteinander verbunden sind.

3. Strahlungsbrenner nach Anspruch 1 oder 2, dadurch gekennzeichnet, daß zwischen den Reflektorinnenwänden (3, 4) und den Trägern für die Brenner-Keramik-Platte (6) bzw. den Begrenzungswänden (63) sowie der Glaskeramikplatte (7) Wärmeausdehnungsfalze vorgesehen sind.

4. Strahlungsbrenner nach Anspruch 3, dadurch gekennzeichnet, daß die Wärmeausdehnungsfalze (66, 67; 70, 71) aus je zwei umgebogenen ineinander greifenden Blechrändern gebildet sind.

5. Strahlungsbrenner nach Anspruch 3 oder 4, dadurch gekennzeichnet, daß der obere Rand der Reflektorinnenwände (3, 4) waagerecht nach innen umgekantet ist und sich ein U-förmiger nach oben öffnender Falz (71) anschließt, zwischen dessen beide vertikale Schenkel ein Steg (70) eingreift, welcher am Rand des Trägers (63) für die Brenner-Keramik-Platte (6) umgekantet ist.

6. Strahlungsbrenner nach einem der vorhergehenden Ansprüche, dadurch gekennzeichnet, daß im mittleren Bereich der Reflektorinnenwände (3, 4) längsverlaufende Sicken (68) eingepreßt sind.

7. Strahlungsbrenner nach einem der vorhergehenden Ansprüche, dadurch gekennzeichnet, daß die Glaskeramikplatte (7) von einem Rahmen (27) über Abstandshalter (25, 26) getragen ist.

8. Strahlungsbrenner nach Anspruch 7, dadurch gekennzeichnet, daß die Glaskeramikplatte (7) aus zwei oder mehreren Plattenteilen zusammengesetzt ist und die Plattenteile von einem Gitterrahmen (27) getragen sind.

9. Strahlungsbrenner nach einem der vorhergehenden Ansprüche, dadurch gekennzeichnet, daß der Glaskeramikplatte (7) ein Strahlungsgitter (39) vorgeschaltet ist.

10. Strahlungsbrenner nach einem der vorhergehenden Ansprüche, dadurch gekennzeichnet, daß in der Zwischenkammer (12) Leitbleche (59) zur gleichmäßigen Verteilung des Brennstoff-Luft-Gemisches vorgesehen sind.

11. Strahlungsbrenner nach einem der vorhergehenden Ansprüche, dadurch gekennzeichnet, daß die Gehäuseaußenwand (9) mit Abstand von dem unteren Ende (14) und der Außenwand (33) der Zwischenkammer (12) sowie der oberen Begrenzungswand (34) der Gemischkammer (5) derart gestaltet ist, daß ein Außenkanal (18) zum Aufwärtsströmen von heißen Verbrennungsabgasen gebildet ist, welche zusätzlich die Außenwand (33) der Zwischenkammer (12) bestreichen und daß in dem Teil der Gehäuseaußenwand (10), der sich oberhalb der Gemischkammer (5) befindet, Ausströmöffnungen (31, 32) vorgesehen sind.

12. Strahlungsbrenner nach Anspruch 2, dadurch gekennzeichnet, daß die Blechteile der Gehäuseaußenwand (8, 9, 10) an ihren Rändern um 90° nach außen umgekantete Rippen (22, 23, 24) aufweisen.

13. Strahlungsbrenner nach Anspruch 11, dadurch gekennzeichnet, daß die Gehäuseaußenwand (16, 17) im Bereich unterhalb der Zwischenkammer (12) zu einer Fangtasche (15) erweitert ist.

14. Strahlungsbrenner nach einem der vorhergehenden An sprüche, gekennzeichnet durch eine Aufhängevorrichtung (52, 60) mit Ketten (79).

## Claims

1. Radiant burner for gaseous fuel with the following features:
a) a double-walled housing (1) of approximately trapezoidal cross-section, which is open on the under side (2) and has reflector inner walls (3, 4),
b) a mixture chamber (5) located in the upper part of the housing (1), for the preparation of the gaseous fuel/air mixture,
c) at least one burner ceramic plate (6) connected to the open under side of the mixture chamber (5) and comprising numerous combustion channels, with the main radiation direction being downwards,
d) at least one unperforated glass ceramic plate (7), which is located in front of the burner ceramic plate (6) with the smallest possible distance from the radiation side so that the combustion exhaust gases may escape at least in one boundary region,
e) an apparatus (80) for supplying fuel and air consisting of an injector nozzle (82) connected to a fuel line (81) and of a mixing pipe (13), which is open at one end face (83) after the injector nozzle (82) and is then constructed as a venturi tube (84), extends at least over part of the length within an obliquely extending double wall (3, 9) of the housing (1) as close as possible to the housing lower edge (14, 16), but ascending at an acute angle (87) and comprises an opening for the free passage of the fuel/air mixture,
f) an intermediate chamber (12) between the mixing tube (13) and the mixture chamber (5) is formed in the double-walled housing (3, 9) so that hot combustion exhaust gases flow at least over the reflector inner wall (3) and the fuel/air mixture flowing upwards in the intermediate chamber (12) is pre-heated, so that the latter is subject to an upthrust over the entire outside length of the housing.

2. Radiant burner according to Claim 1, characterised in that essentially all the sheet metal parts of the housing are formed from flat-surface metal sheets by turning-up or folding and are connected to each other.

3. Radiant burner according to Claim 1 or 2, characterised in that provided between the reflector inner walls (3, 4) and the supports for the burner-ceramic plates (6) or the boundary walls (63) as well as the glass ceramic plate (7) are thermal expansion folds.

4. Radiant burner according to Claim 3, characterised in that the thermal expansion folds (66, 67; 70, 71) are formed respectively from two bent-over sheet metal edges engaging one in the other.

5. Radiant burner according to Claim 3 or 4, characterised in that the upper edge of the reflector inner walls (3, 4) is turned over horizontally inwards and a U-shaped fold (71) open at the top adjoins it, between the two vertical sides of which a web (70) engages, which is turned-over on the edge of the support (63) for the burner ceramic plate (6).

6. Radiant burner according to one of the preceding Claims, characterised in that longitudinally extending stiffening corrugations (68) are pressed-in in the central region of the reflector inner walls (3, 4).

7. Radiant burner according to one of the preceding Claims, characterised in that the glass ceramic plate (7) is supported by a frame (27) by way of spacer members (25, 26).

8. Radiant burner according to Claim 7, characterised in that the glass ceramic plate (7) is composed of two or more plate parts and the plate parts are supported by a grating frame (27).

9. Radiant burner according to one of the preceding Claims, characterised in that a radiant grid (39) is located in front of the glass ceramic plate (7).

10. Radiant burner according to one of the preceding Claims, characterised in that provided in the intermediate chamber (12) are baffles (59) for the uniform distribution of the fuel/air mixture.

11. Radiant burner according to one of the preceding Claims, characterised in that the housing outer wall (9) is formed at a distance from the lower end (14) and the outer wall (33) of the intermediate chamber (12) as well as the upper boundary wall (34) of the mixture chamber (5) so that an outer channel (18) is formed for the upwards flow of hot combustion exhaust gases, which additionally flow over the outer wall (33) of the intermediate chamber (12) and that provided in the part of the housing outer wall (10), which is located above the mixture chamber (5), are outlet openings (31, 32).

12. Radiant burner according to Claim 2, characterised in that the sheet metal parts of the housing outer wall (8, 9, 10) comprise on their edges ribs (22, 23, 24) bent outwards through 90°.

13. Radiant burner according to Claim 11, characterised in that in the region below the intermediate chamber (12), the housing outer wall (16, 17) widens out to form a collecting pocket (15).

14. Radiant burner according to one of the preceding Claims, characterised by a suspension device (52, 60) with chains (79).

## Revendications

1. Brûleur radiant pour combustible gazeux, présentant les caractéristiques suivantes :
a) un boîtier à paroi double (1), qui possède une forme approximativement trapézoïdale en coupe transversale, est ouvert au niveau de la face inférieure (2) et possède des parois intérieures réfléchissantes (3,4),
b) une chambre de mélange (5) disposée dans la partie supérieure du boîtier (1) et servant à préparer le mélange gazeux combustible-air,
c) au moins une plaque en céramique de brûleur (6), qui se raccorde à la face inférieure ouverte de la chambre de mélange (5), comporte de nombreux canaux de combustion et possède une direction de rayonnement principale,
d) au moins une plaque vitrocéramique non perforée (7), qui est disposée en avant de la plaque céramique (6) du brûleur, à une distance aussi faible que possible sur le côté d'émission du rayonnement de sorte que les gaz de combustion peuvent s'évacuer au moins dans une zone marginale,
e) un dispositif (80) d'amenée du combustible et de l'air, constitué par une buse d'injection (82) raccordée à une canalisation (81) d'amenée du combustible, et par un tube mélangeur (13), qui est ouvert au niveau d'une extrémité frontale (83) en direction de la buse d'injection (82) et est réalisé ensuite en tant que tube à venturi (84), s'étend aussi près que possible de la paroi inférieure (14, 16) du boîtier, mais en montant sous un angle aigu (87), au moins sur une partie de la longueur à l'intérieur d'une paroi double oblique (3,9) du boîtier (1), et possède une ouverture permettant le libre passage du mélange combustible-air,
f) une chambre intermédiaire (12) située entre le tube mélangeur (13) et la chambre de mélange (5) est formée dans le boîtier à paroi double (3,9) de telle sorte qu'au moins la paroi intérieure réfléchissante (3) est balayée par des gaz de combustion chauds et que le mélange combustible-air, qui circule selon un déplacement ascendant dans la chambre intermédiaire (12), est préchauffé de sorte que ce mélange est soumis à une poussée ascensionnelle, sur toute la longueur extérieure du boîtier.

2. Brûleur radiant selon la revendication 1, caractérisé en ce que essentiellement toutes les pièces en tôle du boîtier sont formées par des tôles à surface plane, par rabattement ou repliage et sont reliées entre elles.

3. Brûleur radiant selon la revendication 1 ou 2, caractérisé en ce que des feuilluress de dilatation thermique sont prévues entre les parois intérieures réfléchissantes (3,4) et les supports pour la plaque céramique (6) du brûleur et les parois de limitation (63) ainsi que la plaque vitrocéramique (7).

4. Brûleur radiant selon la revendication 3, caractérisé en ce que les feuillures de dilatation thermique (66,67; 70,71) sont formées par respectivement deux bords en tôle repliés, réciproquement imbriqués.

5. Brûleur radiant selon la revendication 3 ou 4, caractérisé en ce que le bord supérieur des parois intérieures réfléchissantes (3,4) est replié horizontalement vers l'intérieur et qu'à ce bord se raccorde une feuillure (71) en forme de U, qui s'ouvre vers le haut et entre les deux ailes verticales de laquelle s'engage une barrette (70), qui est formée par repliage du bord du support (63) pour la plaque céramique (6) du brûleur.

6. Brûleur radiant selon l'une des revendications précédentes, caractérisé en ce que des moulures longitudinales (68) sont formées par emboutissage dans la partie médiane des parois intérieures réfléchissantes (3, 4).

7. Brûleur radiant selon l'une des revendications précédentes, caractérisé en ce que la plaque vitrocéramique (16) est portée par un cadre (27) par l'intermédiaire d'entretoises (25,26).

8. Brûleur radiant selon la revendication 7, caractérisé en ce que la plaque vitrocéramique (7) est formée par l'assemblage de deux ou de plusieurs éléments de plaque et que les éléments de plaque sont portés par un cadre en forme de grille (27).

9. Brûleur radiant selon l'une des revendications précédentes, caractérisé en ce qu'une grille (39) de diffusion du rayonnement est disposée en avant de la plaque vitrocéramique (7).

10. Brûleur radiant selon l'une des revendications précédentes, caractérisé en ce que des chicanes (59) servant à répartir de façon uniforme le mélange combustible-air sont prévues dans la chambre intermédiaire (12).

11. Brûleur radiant selon l'une des revendications précédentes, caractérisé en ce que la paroi extérieure (9) du boîtier, à distance de l'extrémité inférieure (14) et la paroi extérieure (33) de la chambre intermédiaire (12) ainsi que la paroi limite supérieure (34) de la chambre de mélange (5) sont conformées de manière à délimiter un canal extérieur (18) pour la circulation ascendante de gaz de combustion chaud, qui balayent en outre la paroi extérieure (33) de la chambre intermédiaire (12), et que des ouvertures de sortie (31,32) sont prévues dans la partie de la paroi extérieure (10) du boîtier, qui est située au-dessus de la chambre de mélange (5).

12. Brûleur radiant selon la revendication 2, caractérisé par le fait que les parties en tôle de la paroi extérieure (8,9,10) du boîtier possèdent, sur leurs bords, des nervures (22,23,24) rabattues sur 90° vers l'extérieur.

13. Brûleur radiant selon la revendication 11, caractérisé en ce que la paroi extérieure (16,17) du boîtier s'élargit, dans la zone située au-dessous de la chambre intermédiaire (12), pour former une poche réceptrice (15).

14. Brûleur radiant selon l'une des revendications précédentes, caractérisé par un dispositif de support (52, 60) comportant des chaînes (79).
